# EUROPEAN PATENT APPLICATION

(11) **EP 3 940 632 A1**
(43) Date of publication of application: **19.01.2022**
(21) Application number: 20770701.9
(22) Date of filing: 06.02.2020
(51) Int. Cl.: G06T 7/00

(54) **IMAGE PROCESSING LEARNING PROGRAM, IMAGE PROCESSING PROGRAM, IMAGE PROCESSING DEVICE, AND IMAGE PROCESSING SYSTEM**

(30) Priority: 14.03.2019 JP 2019047434
(71) Applicant: Navier Inc., Tokyo 102-0084 (JP)
(72) Inventor: MAEDA Shunta, Tokyo 102-0084 (JP)
(74) Representative: TBK
(86) International application number: PCT/JP2020/004451
(87) International publication number: WO 2020/184005

(57) **Abstract**

To provide an image processing learning program for clustering, without requiring labeling, a data set used for learning of image processing and performing the learning of the image processing such that accuracy of the image processing for classification domains is improved, an image processing program learned by the program, and an information processing apparatus and an image processing system.

A terminal 1 includes a plurality of super-resolution means 1020, 1021,... and learning means 104 for inputting, to k-th super-resolution means 102k corresponding to a k-th classification domain including a largest number of low-resolution images among classification domains included in a group of learning targets and i-th super-resolution means 102i, a low-resolution image included in the k-th classification domain, giving a classification label of the super-resolution means 102k or the super-resolution means 102i having high accuracy of a super-resolution image to be output, and causing one super-resolution means 102k or super-resolution means 102i having high accuracy to learn with the low-resolution image.

## Description

### Technical Field

The present invention relates to an image processing learning program, an image processing program, an information processing apparatus, and an image processing system.

### Background Art

As a conventional technique, there has been proposed an image processing learning program for clustering a data set beforehand and performing learning of super resolution (see, for example, Non Patent Literature 1).

In single image super resolution for restoring a single high-resolution image from a single low-resolution image, the image processing learning program disclosed in Non Patent Literature 1 prepares a plurality of low-resolution images as a data set, clusters the data set beforehand with K-means clustering to divide the data set into classification domains, and prepares a convolutional neural network (CNN) models as many as the number of classification domains and performs learning using the distance between an image input to the CNN models and a cluster center to obtain super-resolution means. The image processing learning program performs, about the learned CNN models, which are the super-resolution means, inference using the distance between the input image and the cluster center.

### Citation List

### Non Patent Literature

Non Patent Literature 1: Zhen Li, other five people, "Clustering based multiple branches deep networks for single image super-resolution", Multimedia Tools and Applications, Springer Science + Business Media, December 14, 2018

### Summary of Invention

### Technical Problem

However, with the image processing learning program of Non Patent Literature 1 described above, the data set is clustered beforehand. Therefore, although efficiency of learning is improved, since the clustering is sometimes performed based on feature values such as a color, light and shade, and the like of an image, there is a problem in that the clustering does not always link to improvement of accuracy of super resolution.

Therefore, an object of the present invention is to provide an image processing learning program for clustering, without requiring labeling, a data set used for learning of image processing and performing the learning of the image processing such that accuracy of the image processing for classification domains is improved, an image processing program learned by the program, and an information processing apparatus and an image processing system.

### Solution to Problem

An aspect of the present invention provides, in order to achieve the object, an image processing learning program, an image processing program, an information processing apparatus, and an image processing system explained below.

[1] An image processing learning program for causing a computer to function as:
   a plurality of image processing means for subjecting a single input image to image processing and outputting a single output image; and
   the learning means for causing, using a k-th classification domain including a largest number of input images among classification domains included in a group of learning targets including a plurality of input images and target images corresponding to the plurality of input images, single or a plurality of unlearned image processing means to learn to substantially same accuracy as a learned k-th image processing means corresponding to the classification domain, inputting the input images included in the k-th classification domain to the k-th image processing means and the learned single or plurality of image processing means,
   giving, to an input image, a classification label of image processing means having high accuracy for a target image of an output image among the learned single or plurality of image processing means or the k-th image processing means, and causing the single or plurality of image processing means or/and the k-th image processing means to learn with the input image based on accuracy.
[2] The image processing learning program described in [1] above, wherein the learning means completes the learning when all image processing means of the plurality of image processing means are learned or completes the learning when a classification label of an input image of the classification domain including the largest number of input images of the group is only one of the learned single or plurality of image processing means or the k-th image processing means.
[3] The image processing learning program described in [1] or [2] above, further causing the computer to function as
   classifying means for classifying an input image into any one of the classification labels, wherein
   the learning means causes the classifying means to learn using a plurality of input images to which the classification label of the group is given.
[4] An image processing learning program for causing a computer to function as:
   a plurality of image processing means for subjecting a single input image to image processing and outputting a single output image; and
   learning means for, when an input image is input to the learned image processing means from a group of learning targets including a plurality of input images and target images corresponding to the plurality of input images, specifying image processing means including a largest number of the output images having high accuracy for a target image of an output image output by the learned image processing means, causing unlearned image processing means to learn using an input image and a target image having high accuracy of image processing of the specified image processing means and making the unlearned image processing means learned and, thereafter, inputting input images included in the group of the learning targets to all the learned image processing means, and causing the image processing means having high accuracy for a target image of an output image to learn using the input image and the target image.
[5] An image processing program for causing a computer to function as:
   classifying means for classifying an image to be subjected to image processing into any one of a predetermined plurality of categories and inputting the image to image processing means associated with a category of a classification result; and
   a plurality of image processing means learned by executing the image processing learning program described in any one of [1] to [4] above, the plurality of image processing means subjecting the image to be subjected to the image processing input from the classifying means to the image processing.
[6] The image processing program described in [5] above, wherein the classifying means extracts a plurality of partial regions included in the image to be subjected to the image processing, calculates feature values of the plurality of partial regions, and averages the calculated feature values to classify the image to be subjected to the image processing.
[7] An information processing apparatus comprising:
   a plurality of image processing means for subjecting a single input image to image processing and outputting a single output image; and
   the learning means for causing, using a k-th classification domain including a largest number of input images among classification domains included in a group of learning targets including a plurality of input images and target images corresponding to the plurality of input images, single or a plurality of unlearned image processing means to learn to substantially same accuracy as a learned k-th image processing means corresponding to the classification domain, inputting the input images included in the k-th classification domain to the k-th image processing means and the learned single or plurality of image processing means,
   giving, to an input image, a classification label of image processing means having high accuracy for a target image of an output image among the learned single or plurality of image processing means or the k-th image processing means, and causing the single or plurality of image processing means or/and the k-th image processing means to learn with the input image based on accuracy.
[8] An image processing system comprising:
   a server apparatus that distributes, via a network, an image to be subjected to image processing; and
   an information processing apparatus including classifying means for receiving, from the server apparatus, the image to be subjected to the image processing, classifying the received image to be subjected to image processing into any one of a predetermined plurality of categories, and inputting the image to image processing means associated with a category of a classification result and a plurality of image processing means learned by executing the image processing learning program described in any one of [1] to [4] above, the plurality of image processing means subjecting the image to be subjected to the image processing input from the classifying means to the image processing.
[9] The image processing system described in [8] above, wherein the plurality of image processing means of the information processing apparatus is learned using the image to be subjected to the image processing distributed by the server apparatus and a target image corresponding to the image to be subjected to the image processing.

### Advantageous Effects of Invention

According to the invention according to claims 1, 4, 7, and 8, it is possible to perform the learning of the image processing such that accuracy of the image processing for the classification domain is improved.

According to the invention according to claim 2, it is possible to complete the learning when all of the plurality of image processing means are learned or complete the learning when the classification label of the input image of the classification domain including the largest number of input images of the group is only i-th or k-th.

According to the invention according to claim 3, it is possible to cluster, without requiring labeling, the data set used for the learning of the image processing.

According to the invention according to claim 5, it is possible to classify the image to be subjected to the image processing to any one of the predetermined plurality of categories and subject the image to be subjected to the image processing to the image processing with the image processing means associated with the category of the classification result.

According to the invention according to claim 6, it is possible to extract the plurality of partial regions included in the image to be subjected to the image processing, calculate feature values of the plurality of partial regions, and average the calculated feature values to classify the image to be subjected to the image processing.

According to the invention according to claim 9, it is possible to perform image processing optimized for the image to be subjected to the image processing distributed by the server apparatus.

### Brief Description of Drawings

Fig. 1 is a schematic diagram illustrating an example of the configuration of an image processing system according to a first embodiment.
Fig. 2 is a block diagram illustrating a configuration example of a terminal according to the first embodiment.
Fig. 3 is a schematic diagram for explaining a super-resolution operation of the terminal.
Fig. 4 is a flowchart illustrating an example of the super-resolution operation of the terminal in the first embodiment.
Fig. 5A is a schematic diagram for explaining a learning operation of the terminal in the first embodiment.
Fig. 5B is a schematic diagram for explaining the learning operation of the terminal in the first embodiment.
Fig. 5C is a schematic diagram for explaining the learning operation of the terminal in the first embodiment.
Fig. 5D is a schematic diagram for explaining the learning operation of the terminal in the first embodiment.
Fig. 5E is a schematic diagram for explaining the learning operation of the terminal in the first embodiment.
Fig. 5F is a schematic diagram for explaining the learning operation of the terminal in the first embodiment.
Fig. 5G is a schematic diagram for explaining the learning operation of the terminal in the first embodiment.
Fig. 6 is a flowchart illustrating an example of the learning operation of the terminal in the first embodiment.
Fig. 7A is a schematic diagram for explaining a learning operation of a terminal in a second embodiment.
Fig. 7B is a schematic diagram for explaining the learning operation of the terminal in the second embodiment.
Fig. 7C is a schematic diagram for explaining the learning operation of the terminal in the second embodiment.
Fig. 8 is a flowchart illustrating an example of the learning operation of the terminal in the second embodiment.

### Description of Embodiments

### [First Embodiment]

### (Configuration of an image processing system)

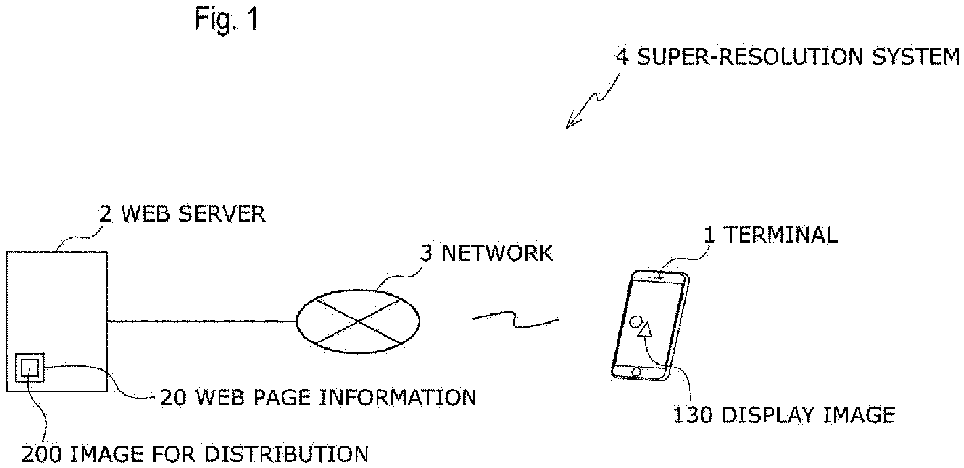

Fig. 1 is a schematic diagram illustrating an example of the configuration of an image processing system according to a first embodiment.

A super-resolution system 5 as an example of this image processing system is configured by communicably connecting a terminal 1 functioning as an information processing apparatus and a Web server 2 to each other by a network 3.

The terminal 1 is an information processing apparatus of a portable type such as a notebook personal computer (PC), a smartphone, or a tablet terminal and includes, in a main body, electronic components such as a central processing unit (CPU) having a function of processing information, a graphics processing unit (GPU), and a flash memory. Note that the terminal 1 is not limited to the information processing apparatus of the portable type and may be a PC of a stationary type.

The Web server 2 is a server-type information processing apparatus and operates according to a request of the terminal 1. The Web server 2 includes, in a main body, electronic components such as a CPU having a function of processing information and a flash memory.

The network 3 is a communication network capable of performing high-speed communication and is, for example, a wired or wireless communication network such as the Internet or a local area network (LAN).

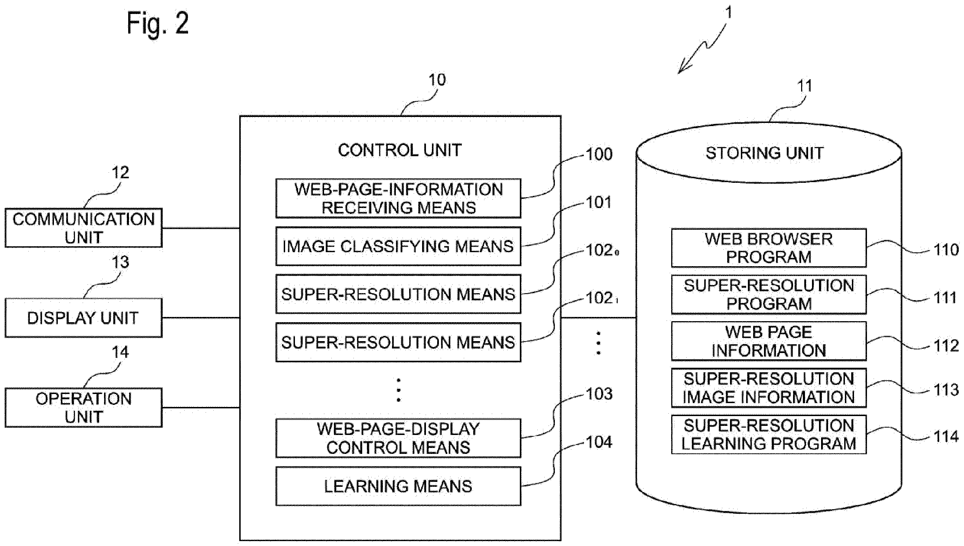

As an example, the terminal 1 transmits a request to the Web server 2 for browsing a Web page. In response to the request, the Web server 2 transmits, to the terminal 1, Web page information 20 forming a Web page including an image for distribution 200 to be displayed on the Web page. The terminal 1 receives the Web page information 20 and the image for distribution 200 and classifies the image for distribution 200, which is an input image, into a category. As an example of image processing, the terminal 1 converts the image for distribution 200 into a high-resolution (super-resolution) image using super-resolution means suitable for the category and displays a display image 130 on a display unit (13, see Fig. 2) based on the Web page information 20. Note that the super-resolution means single image super-resolution for restoring a single high-resolution image from a single low-resolution image (the same applies below). The terminal 1 includes a plurality of super-resolution means respectively suitable for a plurality of categories and properly uses the plurality of super-resolution means to improve accuracy of super resolution compared with when processing is performed by single super-resolution means. Note that the image for distribution 200 is image information having lower resolution compared with the display image 130 and is information with a less data amount. The plurality of super-resolution means are learned by a method explained below. Clustering for learning means for classification in a learning stage is performed.

### (Configuration of the information processing apparatus)

Fig. 2 is a block diagram illustrating a configuration example of the terminal 1 according to the first embodiment.

The terminal 1 is configured from a CPU, a GPU, or the like and includes a control unit 10 that controls units and executes various programs, a storing unit 11 that is configured from a storage medium such as a flash memory and stores information, a communication unit 12 that communicates with the outside via the network 3, a display unit 13 that is configured from a liquid crystal display (LCD) or the like and displays characters and images, and an operation unit 14 that is configured from a touch panel, a keyboard, switches, and the like, which can be touched and operated, arranged on the display unit 13 and receives operation by a user.

The control unit 10 executes a Web browser program 110 explained below to function as Web-page-information receiving means 100, Web-page-display control means 103, and the like. The control unit 10 executes a super-resolution program 111 functioning as an image processing program explained below to function as image classifying means 101, a plurality of super-resolution means 1020, 1021,..., and the like. The control unit 10 executes a super-resolution learning program 114 functioning as an image processing learning program explained below to function as learning means 104 for learning the image classifying means 101, the plurality of super-resolution means 1020, 1021,..., and the like.

The Web-page-information receiving means 100 receives the Web page information 20 including the image for distribution 200 from the Web server 2 via the communication unit 12 and stores the Web page information 20 in the storing unit 11 as Web page information 112. Note that the storage of the Web page information 112 may be temporary.

The image classifying means 101 classifies the image for distribution 200 received by the Web-page-information receiving means 100 into a category and selects super-resolution means suitable for the category of the image for distribution 200 among the plurality of super-resolution means 1020, 1021,.... Note that the image classifying means 101 has learned, for example, a CNN (Convolutional Neural Network) but may have learned logistic regression, a support vector machine, a decision tree, a random forest, Stochastic Gradient Descent (SGD), Kernel density estimation, a K-nearest neighbors algorithm, perceptron, or the like.

The plurality of super-resolution means 1020, 1021,... functioning as image processing means are respectively super-resolution means specialized for super resolution of images in different categories. The plurality of super-resolution means 1020, 1021,... super-resolve the image for distribution 200 serving as an input image classified by the image classifying means 101, generate high-resolution super-resolution image information 113 serving as an output image, and store the super-resolution image information 113 in the storing unit 11. Note that the super-resolution means 1020, 1021,... have learned, for example, the CNN but may have learned an equivalent algorithm.

The Web-page-display control means 103 displays, based on the Web page information 112, the display image 130 of the Web page on the display unit 13 instead of the image for distribution 200 using the super-resolution image information 113.

The learning means 104 causes the image classifying means 101 and the plurality of super-resolution means 1020, 1021,... to learn. Detail of a learning method are explained below. Note that the learning means 104 and the super-resolution learning program 114 are not essential components for the terminal 1 and are generally executed and stored by different apparatuses and are included in the configuration for convenience of explanation. That is, the learning means 104 and the super-resolution learning program 114 only have to be executed by the different apparatuses. The image classifying means 101, the plurality of super-resolution means 1020, 1021,..., and the super-resolution program 111 as a result of learning in the different apparatuses only have to be included in the terminal 1.

The storing unit 11 stores the Web browser program 110 for causing the control unit 10 to operate as the means 100 and 103 explained above, the super-resolution program 111 for causing the control unit 10 to operate as the means 101, 1020, 1021,... explained above, the Web page information 112, the super-resolution image information 113, the super-resolution learning program 114 for causing the control unit 10 to operate as the learning means 104 explained above, and the like.

### (Operation of the super-resolution system)

Subsequently, action of this embodiment is divided into (1) a super-resolution operation and (2) a learning operation and explained. In the "(1) super-resolution operation", operation for executing the super-resolution program 111 learned by the "(2) learning operation" and super-resolving the image for distribution 200 is explained. In the "(2) learning operation", operation for executing the super-resolution learning program 114 to cause the image classifying means 101 and the plurality of super-resolution means 1020, 1021,... to learn is explained.

### (1) Super-resolution operation

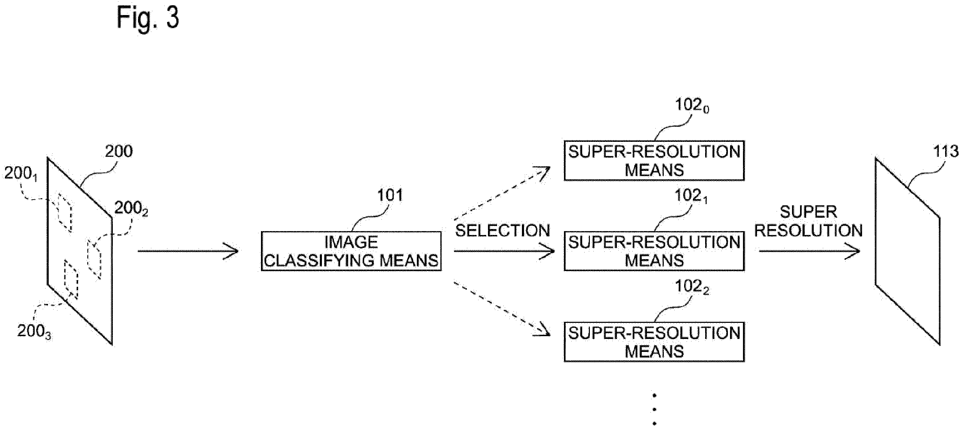

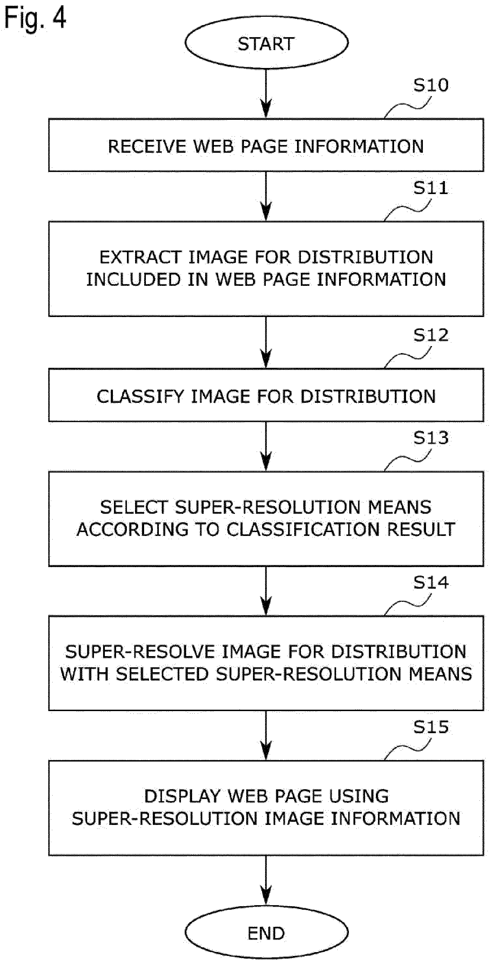

Fig. 3 is a schematic diagram for explaining the super-resolution operation of the terminal 1. Fig. 4 is a flowchart illustrating an example of the super-resolution operation of the terminal 1.

First, the Web-page-information receiving means 100 of the terminal 1 receives the Web page information 20 including the image for distribution 200 from the Web server 2 via the communication unit 12 and stores the Web page information 20 in the storing unit 11 as the Web page information 112 (S10).

Subsequently, the image classifying means 101 of the terminal 1 extracts the image for distribution 200 from the Web page information 20 received by the Web-page-information receiving means 100 (S11).

Subsequently, the image classifying means 101 extracts, from the extracted image for distribution 200, a plurality of patches 2001, 2002, 2003,... as partial regions. The image classifying means 101 performs patch processing of the plurality of patches 2001, 2002, 2003,... and obtains outputs for the plurality of patches 2001, 2002, 2003,.... The image classifying means 101 operates based on the super-resolution program 111 serving as a learning result, classifies the image for distribution 200 into a category from a value obtained by averaging the outputs for the plurality of patches 2001, 2002, 2003,... (S12) and selects, among the plurality of super-resolution means 1020, 1021,..., the super-resolution means 1021 corresponding to a category of a classification result and suitable for super resolution of the image for distribution 200 (S13) .

Subsequently, the super-resolution means 1021 selected by the image classifying means 101 super-resolves the image for distribution 200 (S14), generates high-resolution super-resolution image information 113, and stores the high-resolution super-resolution image information 113 in the storing unit 11.

Subsequently, the Web-page-display control means 103 of the terminal 1 displays, based on the Web page information 112, the display image 130 of the Web page on the display unit 13 using the super-resolution image information 113 instead of the image for distribution 200 (S15) .

### (2) Learning operation

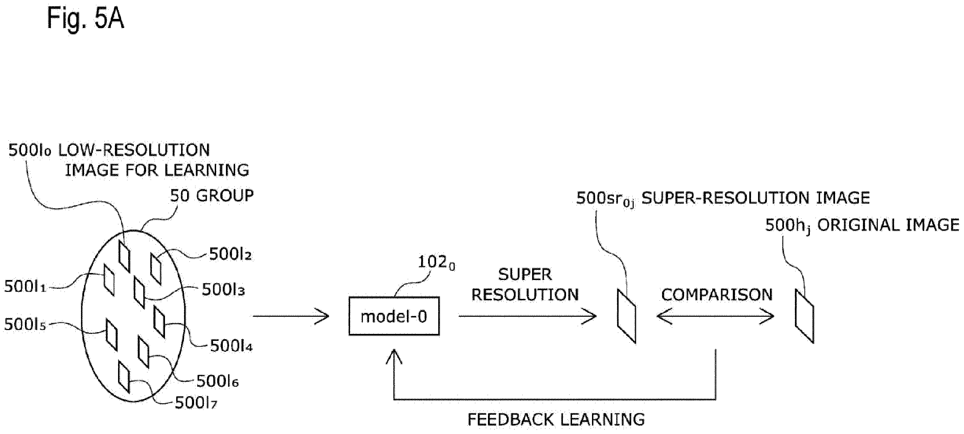

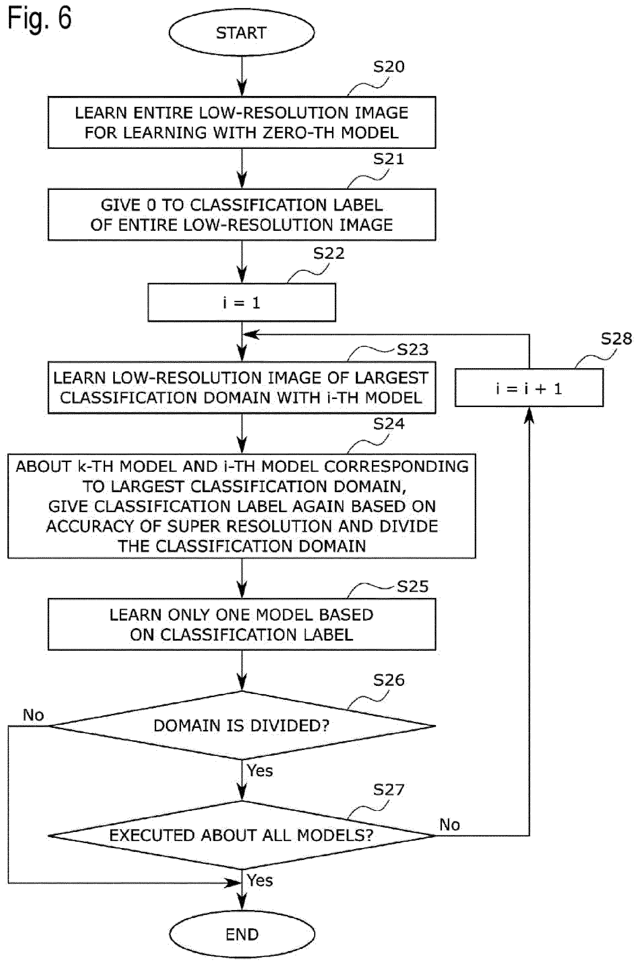

Fig. 5A to Fig. 5G are schematic diagrams for explaining the learning operation of the terminal 1 in the first embodiment. Fig. 6 is a flowchart illustrating an example of the learning operation of the terminal 1 in the first embodiment.

First, as illustrated in Fig. 5A, the learning means 104 of the terminal 1 learns, with the super-resolution means 1020, which is unlearned zero-th super-resolution means, entire low-resolution images for learning 50010 to 50017 included in an entire group 50, which is a learning target (S20). A learning method is explained below.

The super-resolution means 1020 super-resolves a j-th low-resolution image for learning 5001j of the low-resolution images for learning 50010 to 50017 and obtains a super-resolution image 500sr0j. Subsequently, the learning means 104 compares the super-resolution image 500sr0j with a j-th original image 500hj of original images 500h0 to 500h7 serving as target images having higher resolution than the low-resolution images for learning 50010 to 50017 prepared in advance and calculates differences. As the difference, for example, a mean squared error (MSE) or a mean absolute error (MAE) is used. The differences may be calculated using a CNN learned about difference calculation. The learning means 104 feeds back the differences and learns the super-resolution means 1020 about the entire low-resolution images for learning 50010 to 50017 such that the differences decrease. In the following explanation, the difference being small is referred to as "accuracy of super resolution is high".

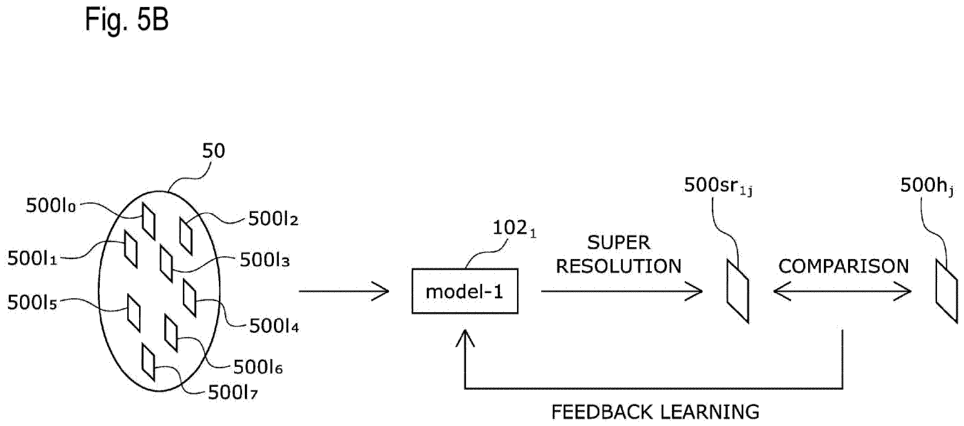

Subsequently, as illustrated in Fig. 5B, the learning means 104 of the terminal 1 learns, with the super-resolution means 1021, which is an unlearned first super-resolution means (S22), a largest classification domain among classification domains included in the entire group 50, that is, since classification is not performed yet in the case of Fig. 5B, the entire low-resolution images for learning 50010 to 50017 (S23). A learning method is the same as the learning of the zero-th super-resolution means as explained below.

The super-resolution means 1021 super-resolves the j-th low-resolution image for learning 5001j of the low-resolution images for learning 50010 to 50017 and obtains a super-resolution image 500sr1j. Subsequently, the learning means 104 compares the super-resolution image 500sr1j with the j-th original image 500hj of the high-resolution original images 500h0 to 500h7 of the low-resolution images for learning 50010 to 50017 prepared in advance and calculates differences. The learning means 104 feeds back the differences and learns the super-resolution means 1021 about the entire low-resolution images for learning 50010 to 50017 such that the differences decrease.

Note that the learning means 104 may copy the learned super-resolution means 1020 as the super-resolution means 1021 and reduce a time required for learning and cost of processing.

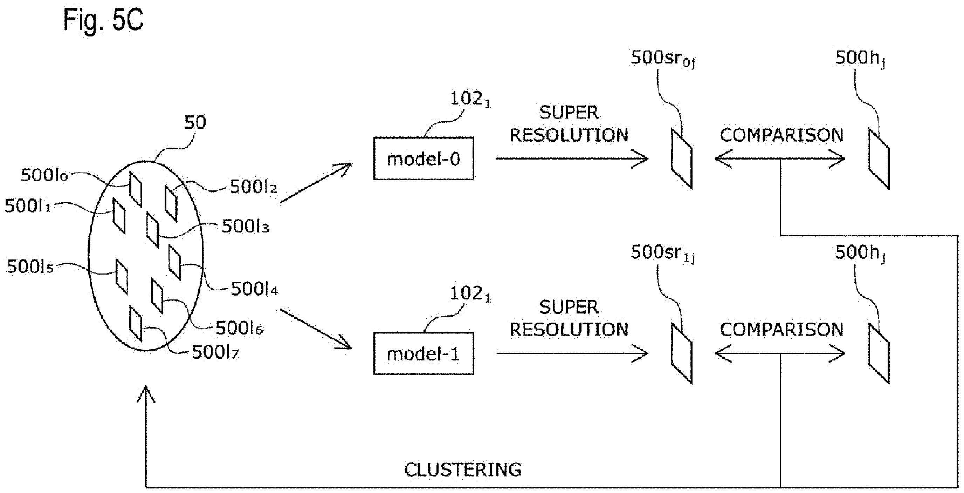

Subsequently, as illustrated in Fig. 5C, the learning means 104 of the terminal 1 performs super resolution with the super-resolution means 1020, which is k-th super-resolution means corresponding to the largest classification domain, that is, in the case of Fig. 5C, k=0-th super-resolution means, and the super-resolution means 1021, which is i=1-th super-resolution means, gives, again, based on accuracy of the super resolution, classification labels of the low-resolution images for learning 50010 to 50017 included in the entire group 50, which is the largest classification domain, and divides a classification domain (S24), and causes, based on the classification label, one super-resolution means 1020 or super-resolution means 1021 having high accuracy to learn (S25). Details of a dividing method and a learning method are explained below.

The super-resolution means 1020 and the super-resolution means 1021 super-resolve the j-th low-resolution image for learning 5001j of the low-resolution images for learning 50010 to 50017 and obtain the super-resolution image 500sr0j and the super-resolution image 500sr1j. Subsequently, the learning means 104 compares the super-resolution image 500sr0j and the super-resolution image 500sr1j with the high-resolution original image 500hj and calculates differences. The learning means 104 gives, to the low-resolution image for learning 5001j, a classification label (0 or 1) of the super-resolution means 1020 or the super-resolution means 1021 that outputs the super-resolution image 500sr0j or the super-resolution image 500sr1j having the smaller difference and clusters the group 50 and feeds back the j-th low-resolution image for learning 5001j to the super-resolution means 1020 or the super-resolution means 1021 having the smaller difference and cause the super-resolution means 1020 or the super-resolution means 1021 to learn the j-th low-resolution image for learning 5001j. Note that, when the differences coincide about the super-resolution means 1020 and the super-resolution means 1021, the learning means 104 selects one of the super-resolution means 1020 and the super-resolution means 1021, gives the classification label (0 or 1) to the low-resolution image for learning 5001j, and clusters the group 50 and feeds back the j-th low-resolution image for learning 5001j to the selected super-resolution means 1020 or super-resolution means 1021 and causes the super-resolution means 1020 or the super-resolution means 1021 to learn the j-th low-resolution image for learning 5001j. The super-resolution means to which the low-resolution image for learning 5001j is fed back to cause the super-resolution means to learn the low-resolution image for learning 5001j does not always need to be one of the super-resolution means 1020 and the super-resolution means 1021. The super-resolution means 1020 and the super-resolution means 1021 may be weighted based on accuracies thereof and caused to learn. That is, weight for the feedback and the learning may be set large for the super-resolution means 1020 or the super-resolution means 1021 having the smaller difference and the weight for the feedback and the learning may be set small for the super-resolution means 1020 or the super-resolution means 1021 having the larger difference.

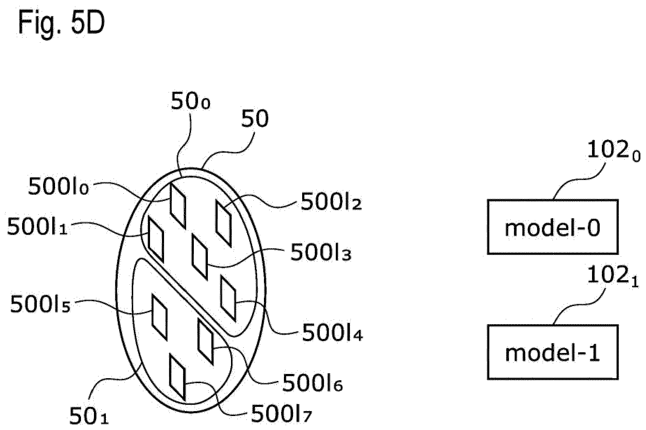

As a result of the clustering, as illustrated in Fig. 5D, the group 50 is divided into a group 500 to which the label 0 of the super-resolution means 1020 is given and a group 501 to which the label 1 of the super-resolution means 1021 is given. As a result of the learning, the super-resolution means 1020 and the super-resolution means 1021 are respectively learned with higher accuracy, that is, accuracies of super resolution are respectively optimized about the group 500 and the group 501 compared with when the group 500 and the group 501 are super-resolved by the other super-resolution means 1020 and super-resolution means 1021.

If the domain is divided (S26; Yes), the learning means 104 of the terminal 1 executes steps S23 to S25 about the next unlearned super-resolution means (S27; No, S28).

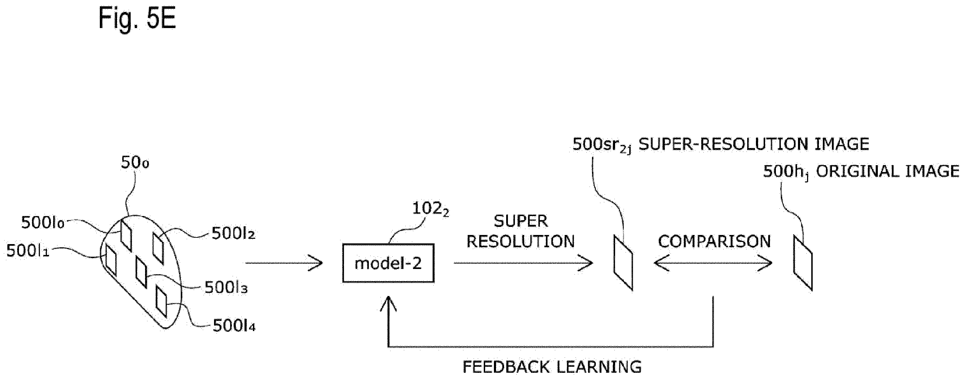

Subsequently, as illustrated in Fig. 5E, the learning means 104 of the terminal 1 learns, with the super-resolution means 1022, which is an unlearned second super-resolution means (S22), the largest classification domain among the classification domains included in the entire group 50, that is, in the case of Fig. 5E, the entire low-resolution images for learning 50010 to 50014 included in the group 500 (S23). Note that the learning means 104 may copy the learned super-resolution means 1020 as the super-resolution means 1022 and reduce a time required for learning and cost of processing.

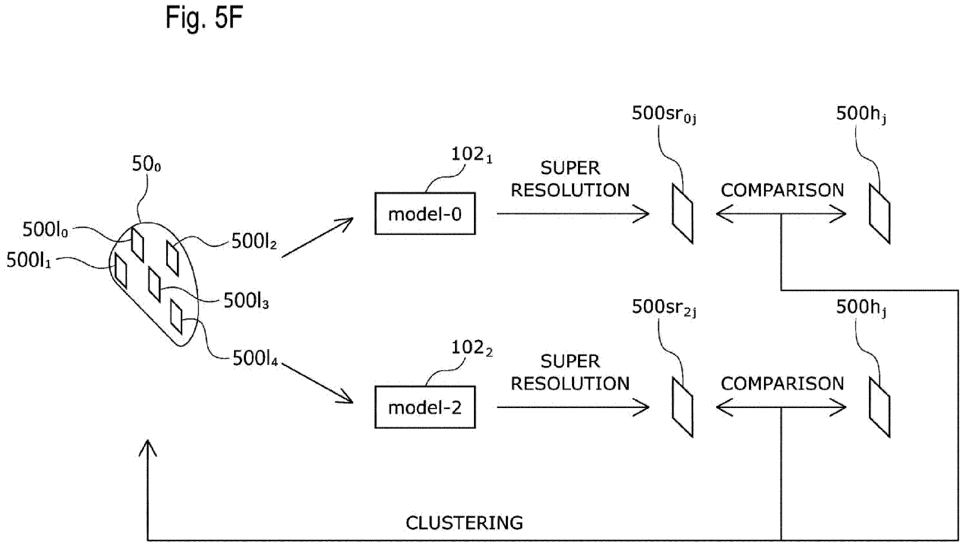

Subsequently, as illustrated in Fig. 5F, the learning means 104 of the terminal 1 performs super resolution with the super-resolution means 1020, which is k-th super-resolution means corresponding to the largest classification domain, that is, in the case of Fig. 5F, k=0-th super-resolution means, and the super-resolution means 1022, which is i=2-th super-resolution means, and gives, again, based on accuracy of super resolution, classification labels of the low-resolution images for learning 50010 to 50014 included in the entire group 500, which is the largest classification domain, and divides the classification domain (S24), and causes one super-resolution means 1020 or super-resolution means 1022 to learn based on the classification labels (S25).

The super-resolution means 1020 and the super-resolution means 1022 super-resolve the j-th low-resolution image for learning 5001j of the low-resolution images for learning 50010 to 50014 and obtain the super-resolution image 500sr0j and a super-resolution image 500sr2j. Subsequently, the learning means 104 compares the super-resolution image 500sr0j and the super-resolution image 500sr1j with the high-resolution original image 500hj and calculates differences. The learning means 104 gives a classification label (0 or 2) of the super-resolution means 1020 or the super-resolution means 1022 having the smaller difference to the low-resolution image for learning 500lj and clusters the group 500 and feeds back the j-th low-resolution image for learning 500lj to the super-resolution means 1020 or the super-resolution means 1022 having the smaller difference and causes the super-resolution means 1020 or the super-resolution means 1022 to learn the j-th low-resolution image for learning 5001j. The super-resolution means to which the low-resolution image for learning 500lj is fed back to cause the super-resolution means to learn the low-resolution image for learning 500lj does not always need to be one of the super-resolution means 1020 and the super-resolution means 1022. The super-resolution means 1020 and the super-resolution means 1022 may be weighted based on accuracies thereof and caused to learn.

As explained above, the super resolution is performed by the k-th super-resolution means corresponding to the largest classification domain and the single i-th super-resolution means. The largest classification domain is divided based on the accuracy of the super resolution and the learning of the super-resolution means is performed based on the accuracy of the super resolution. However, the super resolution may be performed by the k-th super-resolution means corresponding to the largest classification domain and a plurality of i-th, i+1-th, i+2-th,... super-resolution means, the largest classification domain may be divided based on the accuracy of the super resolution, and the learning of the super-resolution means may be performed based on the accuracy of the super resolution.

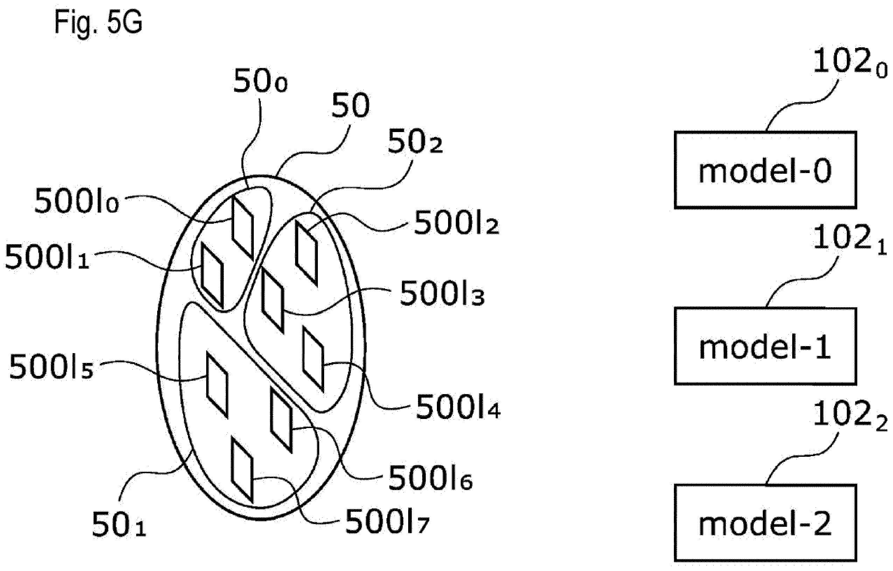

As a result of the clustering, as illustrated in Fig. 5G, the group 500 is divided into the group 500 to which the label 0 of the super-resolution means 1020 is given and a group 502 to which the label 2 of the super-resolution means 1022 is given. As a result of the learning, the accuracies of the super resolution of the super-resolution means 1020, the super-resolution means 1021, and the super-resolution means 1022 are respectively optimized about the group 500, the group 501, and the group 502.

When finishing executing steps S23 to S25 about all the prepared super-resolution means (S27; Yes), the learning means 104 of the terminal 1 ends the operation. Even when the operation is not executed about all the prepared super-resolution means, if the domain is not divided any more (S26; No), the learning means 104 of the terminal 1 ends the operation and stops using the super-resolution means.

When all the steps end, the learning of all the super-resolution means 1020, 1021,... is completed, and the classification domain of the group 50 is divided, the learning means 104 learns the image classifying means 101 about the low-resolution image for learning 500lj to which the classification label of the group 50 is given. Note that, as in the case illustrated in Fig. 3, the image classifying means 101 may be learned by extracting a plurality of patches from the low-resolution image for learning 500lj and performing patch processing or may be directly processed and learned using the low-resolution image for learning 500lj as one patch.

### (Effects of the first embodiment)

According to the first embodiment explained above, in the single image super resolution, when the plurality of super-resolution means 1020, 1021,... are caused to learn, super-resolution means 102k corresponding to a classification domain 50k in the data set (the group 50) used for the learning of the super resolution and super-resolution means 102i to be learned anew are caused to compete and learn. A label of the super-resolution means 102k or 102i having high accuracy of super resolution of an image included in the classification domain 50k is given to the data set (the group 50) and the data set (the group 50) is clustered. The super-resolution means 102k or 102i having a result with high accuracy is caused to learn with the image and set as the super-resolution means 102k or 102i optimized for a divided classification domain 50k and 50i. Therefore, it is possible to cluster the data set (the group 50) used for the learning of the super resolution without necessity of labeling the data set (the group 50) in advance. It is possible to efficiently perform the optimization of the classification domains 50k and 50i and the super-resolution means 102k and 102i. Since the data set can be spontaneously clustered by the learning of the super-resolution means, it is possible to prepare a data set for learning of the image classifying means 101 without requiring labeling. It is possible to efficiently learn the image classifying means 101.

By preparing the plurality of super-resolution means 1020, 1021,... and specialized according to a category of an image, it is possible to improve accuracy as a whole and the respective super-resolution means 1020, 1021,... can be formed as models light in weight. By causing the learned plurality of super-resolution means 1020, 1021,... and image classifying means 101 to function in the terminal 1, it is possible to reduce the capacity of the image for distribution 200 and reduce a communication amount of the network 3.

### [Second Embodiment]

A second embodiment is different from the first embodiment in that a classification label is not given in clustering in a learning operation. Note that, since a configuration and a super-resolution operation are the same as those in the first embodiment, explanation about the configuration and the super-resolution operation is omitted.

### (3) Learning operation

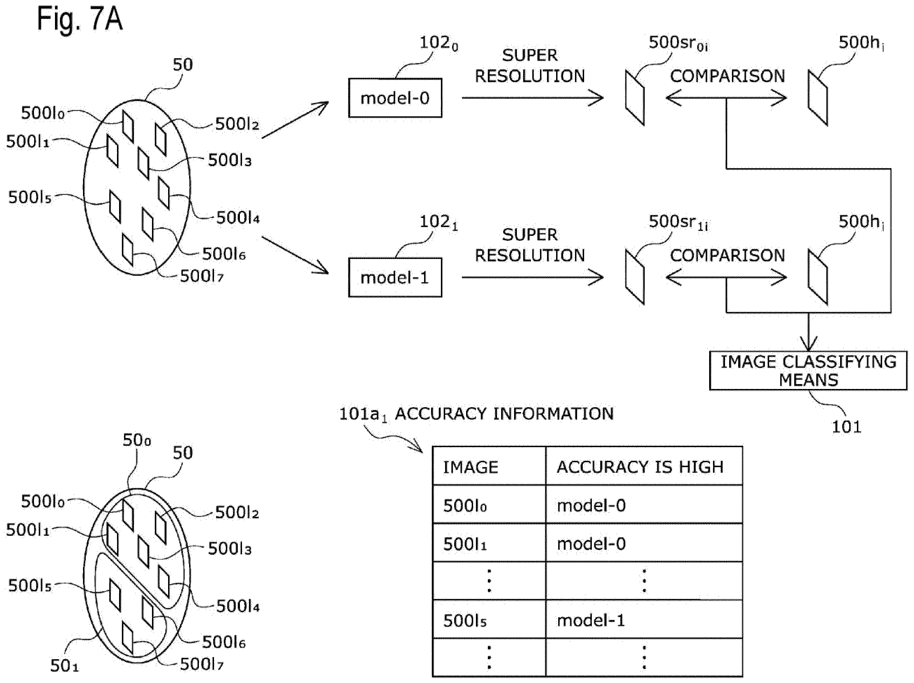

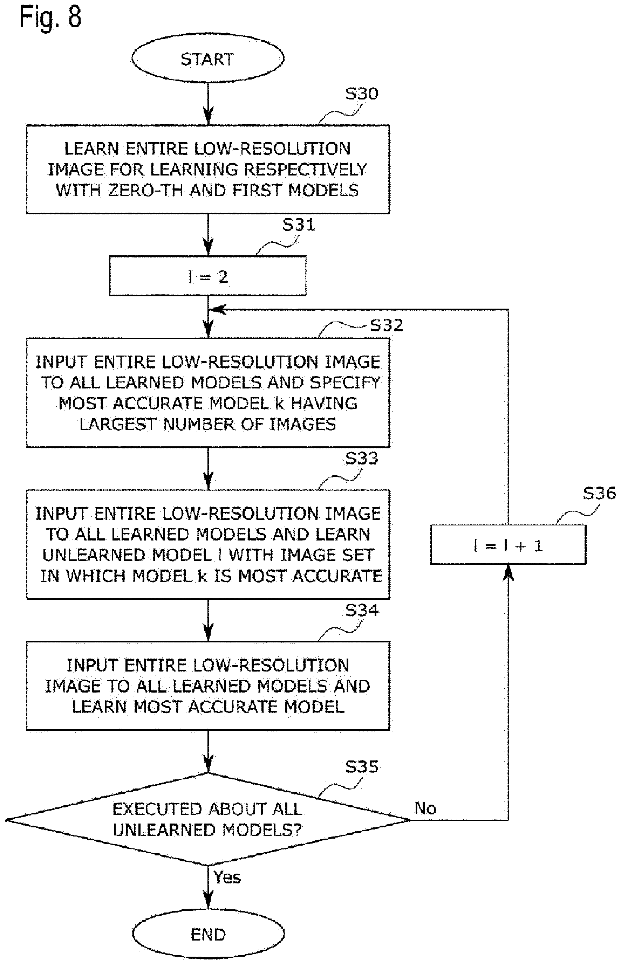

Fig. 7A to Fig. 7C are schematic diagrams for explaining a learning operation of the terminal 1 in the second embodiment. Fig. 8 is a flowchart illustrating an example of the learning operation of the terminal 1 in the second embodiment.

First, the learning means 104 of the terminal 1 learns, with the super-resolution means 1020 and the super-resolution means 1021, which are unlearned zero-th and first super-resolution means, the entire low-resolution images for learning 50010 to 50017 included in the entire group 50, which is a learning target, (S30). Note that, since a learning method is the same as the learning method in the first embodiment, explanation about the learning method is omitted.

Subsequently, the learning means 104 of the terminal 1 sets a variable 1=2 (S31) and, as illustrated in an upper part of Fig. 7A, inputs the entire low-resolution images for learning 50010 to 50017 included in the entire group 50, which is the learning target, to the learned super-resolution means 1020 and super-resolution means 1021, super-resolves an i-th low-resolution image for learning 5001i, and obtains super-resolution images 500sr0i and 500sr1i. Subsequently, the image classifying means 101 compares the super-resolution images 500sr0i and 500sr1i with an i-th original image 500hi of the high-resolution original images 500h0 to 500h7 of the low-resolution images for learning 50010 to 50017 prepared in advance, records super-resolution means having a small difference, that is, super-resolution means having high accuracy as accuracy information 101a1 as illustrated in a lower part of Fig. 7A, and specifies a most accurate model k having the largest number of images (S32). In the case of Fig. 7A, k=0. Note that the recording of the accuracy information 101a1 may be temporary storage. In this state, conceptually, the group 50 is divided into the group 500 highly accurately super-resolved by the super-resolution means 1020 and the group 501 highly accurately super-resolved by the super-resolution means 1021.

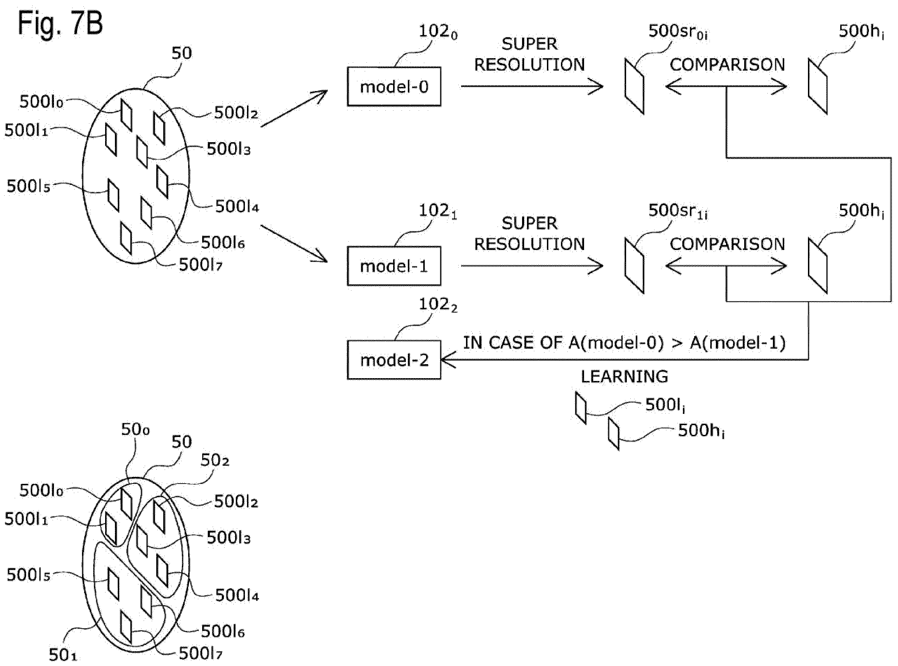

Subsequently, as illustrated in an upper part of Fig. 7B, the learning means 104 of the terminal 1 inputs the entire low-resolution images for learning 50010 to 50017 included in the entire group 50, which is the learning target, to the learned super-resolution means 1020 and super-resolution means 1021, super-resolves the i-th low-resolution image for learning 5001i, and obtains the super-resolution images 500sr0i and 500sr1i. Subsequently, the image classifying means 101 compares the super-resolution images 500sr0i and 500sr1i with the i-th original image 500hi of the high-resolution original images 500h0 to 500h7 of the low-resolution images for learning 50010 to 50017 prepared in advance and causes an unlearned 1-th super-resolution means, that is, super-resolution means 1021 to learn using a learning set of the i-th low-resolution image for learning 5001i having the smallest difference from the super-resolution image 500sr0i and the original image 500hi (S33). The learning of the super-resolution means 1021 is performed until accuracy becomes the same degree as the accuracy of the super-resolution means 1020. In this state, as illustrated in a lower part of Fig. 7B, conceptually, the group 50 is divided into the group 500 highly accurately super-resolved by the super-resolution means 1020, the group 501 highly accurately super-resolved by the super-resolution means 1021, and the group 502 highly accurately super-resolved by the super-resolution means 1022. That is, compared with the state illustrated in the lower part of Fig. 7A, this state is a state in which a group highly accurately super-resolved by the super-resolution means 1021 is divided into two.

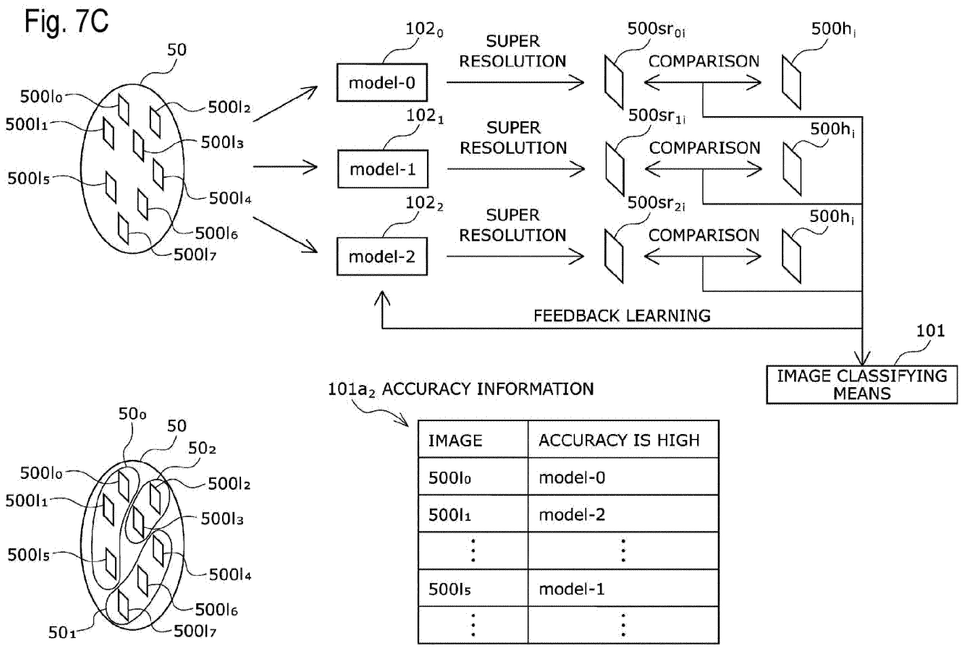

Subsequently, as illustrated in an upper part of Fig. 7C, the learning means 104 of the terminal 1 inputs the entire low-resolution images for learning 50010 to 50017 included in the entire group 50, which is the learning target, to the learned super-resolution means 1020, super-resolution means 1021, and super-resolution means 1022, super-resolves the i-th low-resolution image for learning 5001i, and obtains the super-resolution images 500sr0i, 500sr1i, and 500sr2i. Subsequently, the image classifying means 101 compares the super-resolution images 500sr0i, 500sr1i, and 500sr2i with the i-th original image 500hi of the high-resolution original images 500h0 to 500h7 of the low-resolution images for learning 50010 to 50017 prepared in advance and learns super-resolution means having the smallest difference, that is, super-resolution means having the highest accuracy by feeding back the learning set of the i-th low-resolution image for learning 5001i and the original image 500hi (S34).

In this state, as illustrated in a lower part of Fig. 7C, conceptually, the group 50 is divided into the group 500 highly accurately super-resolved by the super-resolution means 1020, the group 501 highly accurately super-resolved by the super-resolution means 1021, and the group 502 highly accurately super-resolved by the super-resolution means 1022. Note that a division result does not always coincide compared with the state illustrated in the lower part of Fig. 7B because, as a result of performing the feedback learning, changes occur in the super-resolution means 1020, the super-resolution means 1021, and the super-resolution means 1022.

As illustrated in a lower part of Fig. 7C, the image classifying means 101 compares the super-resolution images 500sr0i, 500sr1i, and 500sr2i with the i-th original image 500hi of the high-resolution original images 500h0 to 500h7 of the low-resolution images for learning 50010 to 50017 prepared in advance, records super-resolution means having a small difference, that is, super-resolution means having high accuracy as accuracy information 101a2 and specifies the most accurate model k having the largest number of images (S32). In the case of Fig. 7C, k=0 or 1.

In this way, steps S32 to S34 are executed about all unlearned models (S35, S36).

When all the steps explained above end and the learning of all the super-resolution means 1020, 1021,... is completed, the learning means 104 learns the image classifying means 101 about the group 50 using finally obtained accuracy information 101al.

### (Effects of the second embodiment)

According to the second embodiment explained above, in the single image super resolution, when the plurality of super-resolution means 1020, 1021,... are caused to learn, super-resolution means having high accuracy is counted and the super-resolution means 102k corresponding to the classification domain 50k in the data set (the group 50) used for the learning of the super resolution and the super-resolution means 102i to be learned anew are caused to compete and learn. Therefore, it is unnecessary to label, in advance, the data set (the group 50) used for the learning of the super resolution. Labeling halfway in the learning is unnecessary and clustering is possible. It is possible to efficiently perform the optimization of the super-resolution means 102k and 102i.

### [Other embodiments]

Note that the present invention is not limited to the embodiments explained above. Various modifications of the present invention are possible in a range not departing from the gist of the present invention.

In the embodiments, the example is explained in which the Web page information 20 including the image for distribution 200 is distributed from the Web server 2 via the network 3 and the image for distribution 200 is super-resolved in the terminal 1. However, a low-resolution image only has to be distributed and super-resolved in the terminal 1. It goes without saying that it is unnecessary to include the low-resolution image in the Web page information 20 and distributed. That is, the super-resolution program 111 for causing the image classifying means 101 and the super-resolution means 1020, 1021,... to operate can be combined with not only the Web browser but also any application program included in the terminal 1.

Note that the group 50 of images used for learning and the image for distribution 200 may be different from each other or may be the same. When the group 50 and the image for distribution 200 are different, it is possible to create the super-resolution means 1020, 1021,..., which are general models, from the group 50. When the group 50 and the image for distribution 200 are the same, it is possible to create the super-resolution means 1020, 1021,... optimum for the image for distribution 200.

In the embodiments, the super resolution is explained as the example of the image processing. However, as other examples, the present invention is also applicable to learning about image processing such as noise removal from an image, removal of a blur, and sharpening. Content of the image processing is not particularly limited. About the image processing learned using the learning method, content of the image processing is not limited to the super resolution either.

In the embodiments explained above, the functions of the means 100 to 104 of the control unit 10 are realized by the program. However, all or a part of the means may be realized by hardware such as an ASIC. The program used in the embodiments can also be stored in a recording medium such as a CD-ROM and provided. Replacement, deletion, addition, and the like of the steps explained in the embodiments are possible in a range not changing the gist of the present invention.

### Industrial Applicability

There are provided an image processing learning program for clustering, without requiring labeling, a data set used for learning of image processing and performing the learning of the image processing such that accuracy of the image processing for classification domains is improved, an image processing program learned by the program, and an information processing apparatus and an image processing system.

### Reference Signs List

- 1: terminal
- 2: Web server
- 3: network
- 5: super-resolution system
- 10: control unit
- 11: storing unit
- 12: communication unit
- 13: display unit
- 14: operation unit
- 20: Web page information
- 50: group
- 100: Web-page-information receiving unit
- 101: image classifying means
- 1020, 1021: super-resolution means
- 103: Web-page-display control means
- 104: learning means
- 110: Web browser program
- 111: super resolution program
- 112: Web page information
- 113: super-resolution image information
- 114: super-resolution learning program
- 130: display image
- 200: image for distribution

## Claims

1. An image processing learning program for causing a computer to function as:
a plurality of image processing means for subjecting a single input image to image processing and outputting a single output image; and
the learning means for causing, using a k-th classification domain including a largest number of input images among classification domains included in a group of learning targets including a plurality of input images and target images corresponding to the plurality of input images, single or a plurality of unlearned image processing means to learn to substantially same accuracy as a learned k-th image processing means corresponding to the classification domain, inputting the input images included in the k-th classification domain to the k-th image processing means and the learned single or plurality of image processing means,
giving, to an input image, a classification label of image processing means having high accuracy for a target image of an output image among the learned single or plurality of image processing means or the k-th image processing means, and causing the single or plurality of image processing means or/and the k-th image processing means to learn with the input image based on accuracy.

2. The image processing learning program according to claim 1, wherein the learning means completes the learning when all image processing means of the plurality of image processing means are learned or completes the learning when a classification label of an input image of the classification domain including the largest number of input images of the group is only one of the learned single or plurality of image processing means or the k-th image processing means.

3. The image processing learning program according to claim 1 or 2, further causing the computer to function as
classifying means for classifying an input image into any one of the classification labels, wherein
the learning means causes the classifying means to learn using a plurality of input images to which the classification label of the group is given.

4. An image processing learning program for causing a computer to function as:
a plurality of image processing means for subjecting a single input image to image processing and outputting a single output image; and
learning means for, when an input image is input to the learned image processing means from a group of learning targets including a plurality of input images and target images corresponding to the plurality of input images, specifying image processing means including a largest number of the output images having high accuracy for a target image of an output image output by the learned image processing means, causing unlearned image processing means to learn using an input image and a target image having high accuracy of image processing of the specified image processing means and making the unlearned image processing means learned and, thereafter, inputting input images included in the group of the learning targets to all the learned image processing means, and causing the image processing means having high accuracy for a target image of an output image to learn using the input image and the target image.

5. An image processing program for causing a computer to function as:
classifying means for classifying an image to be subjected to image processing into any one of a predetermined plurality of categories and inputting the image to image processing means associated with a category of a classification result; and
a plurality of image processing means learned by executing the image processing learning program according to any one of claims 1 to 4, the plurality of image processing means subjecting the image to be subjected to the image processing input from the classifying means to the image processing.

6. The image processing program according to claim 5, wherein the classifying means extracts a plurality of partial regions included in the image to be subjected to the image processing, calculates feature values of the plurality of partial regions, and averages the calculated feature values to classify the image to be subjected to the image processing.

7. An information processing apparatus comprising:
a plurality of image processing means for subjecting a single input image to image processing and outputting a single output image; and
the learning means for causing, using a k-th classification domain including a largest number of input images among classification domains included in a group of learning targets including a plurality of input images and target images corresponding to the plurality of input images, single or a plurality of unlearned image processing means to learn to substantially same accuracy as a learned k-th image processing means corresponding to the classification domain, inputting the input images included in the k-th classification domain to the k-th image processing means and the learned single or plurality of image processing means,
giving, to an input image, a classification label of image processing means having high accuracy for a target image of an output image among the learned single or plurality of image processing means or the k-th image processing means, and causing the single or plurality of image processing means or/and the k-th image processing means to learn with the input image based on accuracy.

8. An image processing system comprising:
a server apparatus that distributes, via a network, an image to be subjected to image processing; and
an information processing apparatus including classifying means for receiving, from the server apparatus, the image to be subjected to the image processing, classifying the received image to be subjected to image processing into any one of a predetermined plurality of categories, and inputting the image to image processing means associated with a category of a classification result and a plurality of image processing means learned by executing the image processing learning program according to any one of claims 1 to 4, the plurality of image processing means subjecting the image to be subjected to the image processing input from the classifying means to the image processing.

9. The image processing system according to claim 8, wherein the plurality of image processing means of the information processing apparatus is learned using the image to be subjected to the image processing distributed by the server apparatus and a target image corresponding to the image to be subjected to the image processing.
